Europäisches Patentamt

(19) European Patent Office    (11) Publication number:    **0 026 760**

Office européen des brevets    **B1**

(12)    **EUROPEAN PATENT SPECIFICATION**

(45) Date of publication of patent specification: **17.10.84**    (51) Int. Cl.³: **B 60 D 1/14, B 66 C 23/60**

(21) Application number: **79901290.1**

(22) Date of filing: **09.04.79**

(86) International application number:
**PCT/US79/00221**

(87) International publication number:
**WO 80/02127 16.10.80 Gazette 80/23**

(54) TOWING APPARATUS.

(43) Date of publication of application:
**15.04.81 Bulletin 81/15**

(45) Publication of the grant of the patent:
**17.10.84 Bulletin 84/42**

(84) Designated Contracting States:
**CH DE FR GB SE**

(56) References cited:
**DE-A-2 812 750**
**DE-B-1 087 459**
**GB-A-1 054 978**
**US-A-2 283 443**
**US-A-2 449 146**
**US-A-2 481 223**
**US-A-3 158 266**
**US-A-3 254 900**
**US-A-3 716 152**
**US-A-3 810 663**
**US-A-3 908 842**
**US-A-3 966 064**
**US-A-3 977 546**
**US-A-4 044 900**
**US-A-4 047 733**
**US-A-4 152 006**

(73) Proprietor: **DUNLAP, Ward Whitney**
**Post Office Box 8414**
**Charlotte, NC 28208 (US)**

(72) Inventor: **DUNLAP, Ward Whitney**
**Post Office Box 8414**
**Charlotte, NC 28208 (US)**

(74) Representative: **Warren, Keith Stanley et al**
**BARON & WARREN 18 South End Kensington**
**London W8 5BU (GB)**

Courier Press, Leamington Spa, England.

## Description

This invention relates to an integral towing apparatus particularly suited for a towing vehicle, such as a trailer cab with a conventional fifth wheel coupler, to adapt the towing vehicle so as to be capable of towingly engaging at different times either a conventional trailer or an alternate type vehicle such as another trailer cab.

Heretofore, it has been the practice to use a separate and attachable towing apparatus to enable a towing vehicle such as a trailer cab when not towingly engaging a trailer to engage and transport an alternate vehicle such as another trailer cab, usually when the second trailer cab has become either inoperative or damaged. It has been a common practice for the trailer cab to tow a loaded trailer to a given destination, disengage the trailer and engage a trailer cab so as to transport the same back on the return trip. This type of utilization of the original trailer cab was found to be most efficient since a second towing vehicle was not required to be sent on a round-trip solely to engage and tow a disabled trailer cab back to the service facilities or headquarters of a trucking company.

Typically, when the trailer cab transported a trailer to a predetermined destination and the trailer was disengaged, the driver or other parties would assemble and attach a separate towing apparatus to the trailer cab so as to adapt it to transport a disabled trailer cab on the return trip. Such non-integral towing apparatus as has been known heretofore at its destination site typically required several hours or more of valuable driver and trailer cab time for assembly and securing to the trailer cab chassis, which could otherwise have been more profitably utilized.

In US—A—3908842 there is disclosed a towing vehicle having a coupling device by means of which the towing vehicle may be connected to a vehicle to be towed and also equipped with auxiliary towing apparatus comprising an extensible boom including a first member and an extensible outer member, said first member being pivotally mounted on the towing vehicle for pivotal movement from a stowed lower position of the boom with the outer member withdrawn forwardly to a towing position in which the boom is raised and extended rearwardly away from the coupling device for accommodating engagement of towing chains or the like connected to the end of the outer member with the vehicle to be towed, and means for raising the boom from the stowed position to the towing position and vice versa.

The present invention has for an object to provide a simple and reliable auxiliary towing apparatus with which a trailer cab with a conventional fifth wheel coupler may be equipped and which in its stowed position allows the trailer cab to function normally to couple with and tow a trailer and in its towing position allows the trailer cab to tow an alternative vehicle, such as another trailer cab.

The invention consists in a towing vehicle as set forth in the preamble to claim 1, characterised in that the vehicle is equipped with a conventional fifth wheel coupling device for towing a trailer, the boom in its stowed position is lowered beneath and has its outer member withdrawn forwardly towards the coupling sleeve so as to accommodate normal coupling of the fifth wheel coupling device to a trailer and in its towing position is supported by a brace member which is pivotally mounted on the towing vehicle at a location below the boom and such that the brace member is pivotal between a downwardly hanging position and an upwardly directed operative position in which it engages and supports the boom.

The auxiliary integral towing apparatus of this invention is of simple and inexpensive construction so that it does not interfere with the functioning of the trailer cab during normal operation, and it is safer in use than towing apparatus known heretofore since it is not hurriedly assembled and secured to the trailer cab subsequent to removing a trailer at the destination site. The integral towing apparatus is adapted to be carried at all times by the trailer cab and further adapted so that in the stowed position it will accommodate normal operation of the fifth wheel coupler of the trailer cab and in the towing position it will accommodate towing of an alternate type vehicle such as a second trailer cab.

In order that the present invention may be more readily understood, reference will now be made to the accompanying drawings, in which:—

Figure 1 is a side elevational view of a towing vehicle with the integral towing apparatus in towing engagement with a second towing vehicle;

Figure 2 is a side elevational view of a towing vehicle with the integral towing apparatus in conventional towing engagement with a trailer;

Figure 3 is a vertical sectional view of the invention;

Figure 4 is a transverse sectional view taken along lines 4—4 of Figure 3;

Figure 5 is a transverse sectional view taken along lines 5—5 of Figure 3;

Figure 6 is a lifting end elevational view of the invention;

Figure 7 is a perspective view of the invention in its towing position;

Figure 8 is a perspective view of the invention in its stowed position; and

Figure 9 is a transverse sectional view taken along line 9—9 of Figure 8.

The towing apparatus of this invention comprises a boom means mounted on the chassis of a towing vehicle for movement from a stowed position to a towing position. The boom means when in the stowed position accommodates normal operation of the conventional fifth wheel coupling device of the towing vehicle and the boom means when in the towing position accommodates towing engagement of the towing vehicle with an alternate vehicle such as a disabled towing vehicle. Also provided by the towing apparatus of this invention are means for securing the boom means in the towing position.

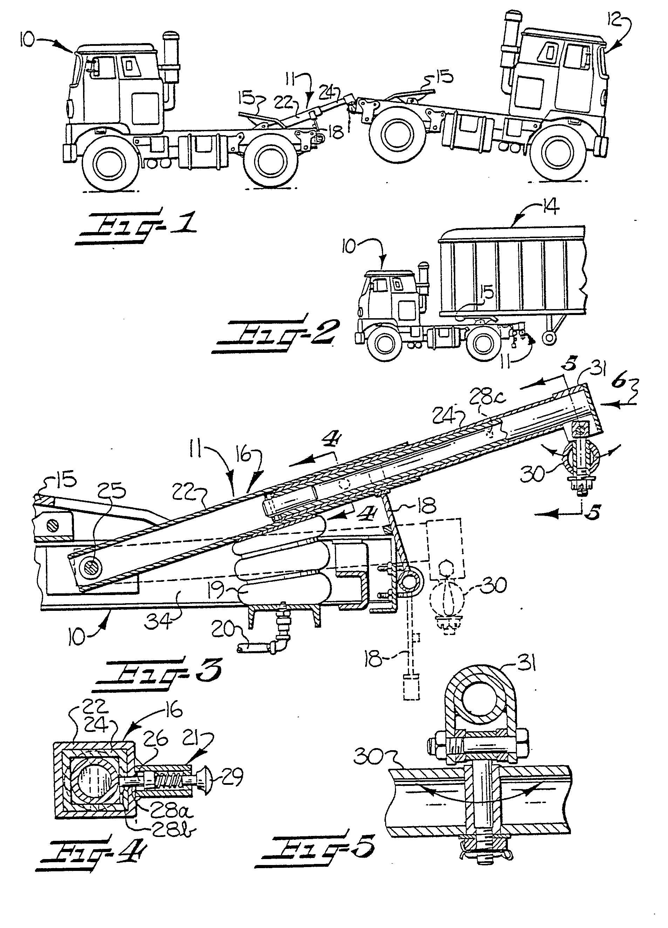

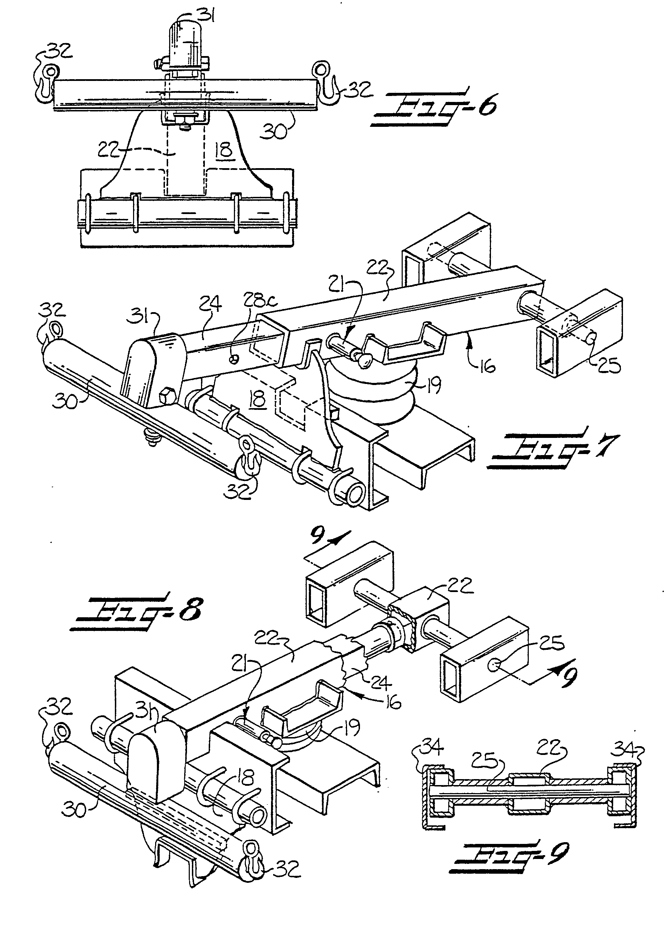

Referring now more specifically to the drawings, Figures 1 and 2 show the towing apparatus in combination with a towing vehicle and Figures 3 through 9 show a preferred embodiment of the towing apparatus according to the present invention.

In Figures 1 and 2, reference numeral 10 broadly indicates a towing vehicle such as a trailer cab, and wherein the integral towing apparatus of this invention, broadly indicated by reference numeral 11, is mounted to the chassis of the towing vehicle 10.

In Figure 1, the towing vehicle 10 with the integral towing apparatus 11 mounted thereon is shown in towing engagement with a second towing vehicle or trailer cab, broadly indicated by reference numeral 12. Figure 2 illustrates the towing vehicle 10 with the integral towing apparatus 11 of the invention mounted thereon in its stowed position so as to allow the towing vehicle to towingly engage a trailer, broadly indicated by reference numeral 14. Thus, Figure 1 illustrates the integral towing apparatus 11 in its raised and extended towing position and Figure 2 illustrates the towing apparatus 11 in its lowered and withdrawn stowed position so as to accommodate normal operation of the towing vehicle 10 in towing the trailer 14. The conventional coupler means for the towing vehicle is indicated by reference numeral 15 and comprises a fifth wheel type coupling device.

Referring now more specifically to the construction of the towing apparatus 11 as illustrated in Figures 3 through 9, it will be noted that the towing apparatus comprises a boom means, a means for securing the boom means in the towing position, a means for raising the boom means from the stowed position (Figure 8) to the towing position (Figure 7), and locking means for securing the boom means in either a withdrawn position or an extended position.

The boom means, generally indicated at 16, is a telescopic construction and comprises a first telescopic member 22 and a second telescopic member 24 wherein the first telescopic member 22 is pivotally mounted on a pivot member 25 extending transversely of the towing vehicle chassis and the second telescopic member 24 is slidably received by the first member and extensible therefrom. Therefore, it can be seen that the telescopic boom means 16 is pivotally mounted for movement from lowered and withdrawn positions while in the stowed position to raised and extended positions while in the towing position. The elements of the boom means are fixed together in an appropriate manner to transmit the force necessary to tow the towed vehicle.

The means for securing the telescopic boom means 16 in the towing position comprises a brace member 18 pivotally mounted on the chassis of the towing vehicle 10 and adapted for positioning in supporting engagement with the telescopic boom means 16 when the boom means is in the raised towing position. There is a weight distributing bar on one side of the brace member 18 to facilitate distributing the towing force on the brace member to the chassis of the towing vehicle 10. The means for raising the telescopic boom means 16 from the stowed position to the towing position preferably is a fluid pressure actuated device, such as an air suspension bag 19, which is positioned between the telescopic boom means 16 and the chassis of the towing vehicle 10 so as to raise the telescopic boom means 16 into the towing position when actuated. An air line 20 communicates with the air suspension bag 19 to provide a conduit for air pressure to activate the air bag. While the drawing shows a single air bag 19, it is contemplated that one or more fluid pressure or mechanically actuated devices of whatever type desired may be used.

Referring now specifically to Figure 4, the locking means, generally indicated at 21, fixedly secures the first and second telescopic members 22 and 24, respectively, at different times in withdrawn and extended relative positions. Preferably, the locking means 21 comprises a rod member 26 which is urged into an aperture 28a in telescopic member 22 and further urged into either one of two apertures 28b and 28c positioned along the longitudinal length of the second telescopic member 24 which is slidably received by the first telescopic member 22. If apertures 28a and 28b are aligned, the telescopic boom means 16 can be locked in the extended position by extending rod member 26 therethrough. Whereas, to lock the telescopic boom means in the withdrawn position, the rod member 26 must be slidably received by aligned apertures 28a and 28c.

The rod member 26 of the locking means 21 has a handle 29 on the end thereof remote from the telescopic member 22 so as to facilitate pulling the rod member from engagement with one of the apertures 28b or 28c of second telescopic member 24 and allowing for sliding of the second telescopic member 24 until the other aperture therein is aligned with the single aperture 28a in the first telescopic member 22. At this relative position, the rod member 26 is slidingly received by both aligned apertures and locks the telescopic boom means 16 into the second of the two positions, extended or withdrawn.

As best shown in Figures 5 and 6, the telescopic boom means 16 has an accessory lifting member 30 mounted transversely of the second telescopic member 24 of the boom means 16 for accommodating the attachment of lifting chains to facilitate the lifting and towing of a second towing vehicle such as a trailer cab. The accessory lifting member 30 is connected to the second telescopic member 24 by means of a universal swivel connection 31 that permits the accessory lifting member to rotate and pivot about multiple axes in accommodation of the motions necessary between a towed and towing vehicle. The accessory lifting member 30 provides stability and means for securing a plurality of chains in a lateral fashion to a disabled towing vehicle or trailer cab 12 to be partly lifted from contact with the road surface and towed by the towing vehicle 10.

Typically, the towing vehicle 10 on one leg of a round trip would transport a trailer 14 connected by means of the conventional fifth wheel coupler 15 associated with the towing vehicle 10. The towing apparatus 11 of this invention would be in its stowed position so as to accommodate normal operation of the fifth wheel coupling device 15. Before beginning another leg of a trip, the towing vehicle 10 would disengage the trailer 14 and subsequently towingly engage, for example, a disabled trailer cab 12. Alternatively, a towing vehicle 10 in combination with the integral towing apparatus could be utilized solely to travel to the location of an inoperative or disabled second towing vehicle 12 and towingly engage the latter with the integral towing apparatus 11 of this invention and transport the inoperative towing vehicle 12 to a servicing site.

The integral towing apparatus 11 as arranged in its towing position can best be seen in Figure 7. The telescopic boom means 16 has been raised to its towing position by the air bag 19, and the second telescopic member 24 has been pulled longitudinally outwardly into an extended position from the first telescopic member 22. The locking means 21 secures the telescopic boom means 16 in the extended position as rod member 26 has been slidingly received within the aligned apertures 28a and 28b situated within the most proximate walls of the first and second telescopic members, 22 and 24 respectively. The brace member 18 has been pivoted from its downwardly extending position (phantom lines in Figure 3) into supporting engagement with the telescopic boom means 16. In this supportive position, the brace member 18 at least in part supports the telescopic boom means 16 and the load borne thereby in the towing position, relieving the air bag 19 from the necessity of being pressurized so as to contribute to longer life for the air bag and avoid any catastrophic failure or blowout. The telescopic boom means 16 may also be supported in part by the air bag 19 positioned between the chassis of the towing vehicle 10 and the telescopic boom means 16, should that be appropriate or desired.

The first telescopic member 22 of the telescopic boom means 16 is pivotally mounted on pivot member 25 which extends transversely of the chassis of the towing vehicle 10. Also to be noted regarding the towing apparatus 11 is the accessory lifting member 30 mounted transversely of the second telescopic member 24 for accommodating the attachment of lifting chains to facilitate towing of the alternate vehicle or trailer cab 12. The lifting chains can be wrapped around the accessory lifting member 30 or fastened to the engaging hooks 32 affixed on both ends of the accessory lifting member 30.

Normally, when the integral towing apparatus 11 of this invention is in the towing position illustrated in Figure 7 and Figure 1, the disabled towing vehicle 12 will be towingly engaged in such a manner that it will be transported with its rear chassis and wheels lifted upwardly and out of contact with the adjacent road surface and the chassis adjacent the rear chassis of the towing vehicle 10. This, of course, is to facilitate the lifting and towing of the disabled towing vehicle 12 since most of its weight is distributed toward the front thereof.

Figure 8 best illustrates the towing apparatus 11 of this invention in its stowed position on the towing vehicle 10 so as to accommodate normal operation of its conventional fifth wheel coupling device 15 in towing trailer 14. The telescopic boom means 16 has been lowered and withdrawn, and the brace member 18 has been pivoted downwardly so as not to be in supporting engagement with the telescopic boom means 16. The locking means 21 has secured the second telescopic member 24 within the first telescopic member 22 with the rod member 26 having been slidably received by the aligned apertures 28a and 28c.

Best illustrated in Figure 9 are the structure and support for the pivot member 25 which extends transversely of the chassis of the towing vehicle, the chassis being designated by reference numeral 34 in Figure 9, and is secured to the chassis at either end of the pivot member 25. The first telescopic member 22 can be observed as supported on the pivot member 25 and pivoted thereon so as to allow for movement of the telescopic boom means 16 from the lowered position while in the stowed position to the raised position while in the towing position.

In operation, the operator would first position trailer cab 10 adjacent the rear of a second trailer cab 12. After disengaging the locking means 21, the second telescopic member 24 would be pulled longitudinally outwardly from within the first telescopic member 22 and tow chains would be wrapped around the rear chassis of disabled trailer cab 12 and secured to the engaging hooks 32 affixed to each end of the accessory lifting member 30. Next, the operator would activate an air source to supply air pressure through the air line 20 to the air bag 19 so as to elevate the laterally extended telescopic boom means 16 and the rear chassis of trailer cab 12 secured thereto. To secure telescopic boom means 16 in the raised and extended position, support member 18 would be pivoted into supporting engagement with the boom means. The driver of trailer cab 10 could then proceed to safely tow the trailer cab 12 to a desired destination for servicing or repair.

It will thus be seen that there is provided, as described hereinbefore, a simple and reliable towing apparatus which can be used in combination with a towing vehicle so as to effect a towing of a second towing vehicle as may be required. More specifically, an integral towing apparatus is provided for use by a conventional trailer cab with a conventional fifth wheel coupler to expeditiously engage a disabled second trailer cab and transport the same to a remote location for servicing.

## Claims

1. A towing vehicle (10) having a coupling device (15) by means of which the towing vehicle (10) may be connected to a vehicle (12) to be towed and also equipped with auxiliary towing apparatus (11) comprising an extensible boom (16) including a first member (22) and an extensible outer member (24), said first member (22) being pivotally mounted on the towing vehicle (10) for pivotal movement from a stowed lower position of the boom (16) with the outer member (24) withdrawn forwardly to a towing position in which the boom (16) is raised and extended rearwardly away from the coupling device (15) for accommodating engagement of towing chains or the like connected to the end of the outer member (24) with the vehicle (12) to be towed, and means for raising the boom (16) from the stowed position to the towing position and vice versa, characterised in that the vehicle is equipped with a conventional fifth wheel coupling device (15) for towing a trailer (14), the boom (16) in its stowed position is lowered beneath and has its outer member (24) withdrawn forwardly towards the coupling sleeve (15) so as to accommodate normal coupling of the fifth wheel coupling device to a trailer (14) and in its towing position is supported by a brace member (18) which is pivotally mounted on the towing vehicle (10) at a location below the boom (16) and such that the brace member is pivotal between a downwardly hanging position and an upwardly directed operative position in which it engages and supports the boom (16).

2. A vehicle as claimed in claim 1, characterised by the means (19) for raising the extensible boom from the stowed position to the towing position, at least in part supports the boom.

3. A vehicle as claimed in claim 1 or 2, characterised in that the means (19) for raising the boom comprises a fluid pressure actuated device acting between the boom and the towing vehicle.

4. A vehicle as claimed in claim 3, characterised in that the means (19) for raising the boom comprises an air suspension bag.

5. A vehicle as claimed in claim 1, 2, 3 or 4, characterised by an accessory lifting member (30) mounted transversely of the extensible outer portion of the boom for accommodating the attachment of lifting chains to facilitate towing of the vehicle to be towed.

6. A vehicle as claimed in any preceding claim, characterised by locking means (21) for fixedly securing the first member (22) and the outer member (24) of the boom at each of the withdrawn and extended positions.

7. A vehicle as claimed in claim 5, characterised by a universal swivel connection (31) interconnecting said accessory lifting member (30) to the outer member (24) of the boom (16), so as to permit the accessory lifting member (30) to pivot about at least two different axes.

## Patentansprüche

1. Zugfahrzeug (Zugmaschine) (10) mit einer Kupplungsvorrichtung (15), mittels welcher das Zugfahrzeug (10) mit einem zu ziehenden Fahrzeug (12) verbindbar ist, und außerdem mit einem Hilfsschleppgerät (11), das einen ausfahrbaren Ausleger (16) mit einem ersten Bauteil (22) und einem ausfahrbaren äußeren Bauteil (24) aufweist, wobei das erste Bauteil (22) schwenkbar am Zugfahrzeug (10) derart angebracht ist, daß es in einer Schwenkbewegung aus einer unteren Ruhestellung des Auslegers (16) mit nach vorne eingezogenem äußerem Bauteil (24) in eine Schleppstellung bringbar ist, in welcher der Ausleger (16) angehoben und von der Kupplungsvorrichtung (15) weg nach hinten ausgefahren ist, so daß am Ende des äußeren Bauteiles (24) angebrachte Zugketten oder dergl. mit dem zu ziehenden Fahrzeug (12) verbindbar sind, und wobei Mittel zum Anheben des Auslegers (16) aus der Ruhestellung in die Schleppstellung und umgekehrt vorgesehen sind, dadurch gekennzeichnet, daß das Fahrzeug mit einer üblichen Sattel-Kupplungsvorrichtung (15) zum Ziehen eines Anhängers (14) ausgerüstet ist, daß der Ausleger (16) in seiner Ruhestellung unter diese abgesenkt und sein äußeres Bauteil (24) nach vorne zur Kupplungsschale (15) eingezogen ist, um das normale Ankoppeln eines Anhängers (14) an die Sattel-Kupplungsvorrichtung zu ermöglichen, und daß der Ausleger (16) in seiner Schleppstellung mittels eines Stützgliedes (18) gehalten ist, das am Zugfahrzeug (10) an einer Stelle unterhalb des Auslegers (16) derart schwenkbar angebracht ist, daß es zwischen einer nach unten herabhängenden und einer nach oben weisenden betriebsmäßigen Stellung, in welcher es am Ausleger (16) anliegt und diesen unterstützt, schwenkbar ist.

2. Fahrzeug nach Anspruch 1, dadurch gekennzeichnet, daß die Mittel (19) zum Anheben des ausfahrbaren Auslegers aus der Ruhestellung in die Schleppstellung den Ausleger mindestens zum Teil unterstützen.

3. Fahrzeug nach Anspruch 1 oder 2, dadurch gekennzeichnet, daß die Mittel (19) zum Anheben des Auslegers eine fluiddruckbetätigte Vorrichtung umfassen, welche zwischen dem Ausleger und dem Zugfahrzeug wirkt.

4. Fahrzeug nach Anspruch 3, dadurch gekennzeichnet, daß die Mittel (19) zum Anheben des Auslegers ein Luftdruckkissen umfassen.

5. Fahrzeug nach Anspruch 1, 2, 3 oder 4, dadurch gekennzeichnet, daß quer am ausfahrbaren äußeren Bauteil des Auslegers ein Zusatz-Hebeteil (30) befestigt ist, an welchem Hebeketten angebracht werden können, um das Schleppen eines zu ziehenden Fahrzeuges zu erleichtern.

6. Fahrzeug nach einem der vorhergehenden Ansprüche, gekennzeichnet durch Rastmittel (21) zur festen Sicherung des ersten Bauteiles (22) und des äußeren Bauteiles (24) des Auslegers jeweils in der eingezogenen und der ausgefahrenen Stellung.

7. Fahrzeug nach Anspruch 5, dadurch gekennzeichnet, daß das Zusatz-Hebeteil (30) mit dem äußeren Bauteil über eine kardanische Verbindung (31) verbunden ist, damit das Zusatz-Hebeteil (30) um mindestens zwei verschiedene Achsen geschwenkt werden kann.

## Revendications

1. Véhicule de remorquage (10) possédant un dispositif de couplage (15) au moyen duquel le véhicule de remorquage (10) peut être raccordé à un véhicule (12) à remorquer et équipé également d'un appareil de remorquage auxiliaire comprenant une flèche (16) pouvant être allongée, qui comporte un premier élément (22) et un élément extérieur (24) pouvant être allongé, le premier élément (22) étant monté pivotant sur le véhicule de remorquage (10) afin d'effectuer un mouvement pivotant d'une position inférieure de rangement de la flèche (16), où l'élément extérieur (24) est tiré vers l'avant, à une position de remorquage, dans laquelle la flèche (16) a été soulevée et éloignée du dispositif de couplage (15) en direction de l'arrière par allongement, pour permettre l'engagement de chaînes de remorquage, ou d'un moyen analogue, raccordant l'extrémité de l'élément extérieur (24) avec le véhicule (12) à remorquer, et un moyen permettant de soulever la flèche (16) de la position de rangement à la position de remorquage, et inversement, caractérisé en ce que le véhicule est équipé d'un dispositif (15) classique de couplage à cinquième roue servant à remorquer une remorque (14), et la flèche (16) est, dans sa position de rangement, abaissée au-dessous, son élément extérieur (24) étant tiré vers l'avant en direction du manchon de couplage (15) de façon à permettre le couplage normal du dispositif de couplage à cinquième roue avec une remorque (14), et est, dans sa position de remorquage, portée par un élément d'entretoisement (18) qui est monté pivotant sur le véhicule de remorquage (10) en un emplacement situé au-dessous de la flèche (16) de façon que l'élément d'entretoisement puisse pivoter entre une position où il pend vers le bas et une position active dirigée vers le haut où il est en contact avec la flèche (16) et la soutient.

2. Véhicule selon la revendication 1, caractérisé en ce que le moyen (19) servant à soulever la flèche de la position de rangement à la position de remorquage soutient au moins partiellement la flèche.

3. Véhicule selon la revendication 1 ou 2, caractérisé en ce que le moyen (19) permettant de soulever la flèche comprend un dispositif actionné par pression de fluide qui exerce son action entre la flèche et le véhicule de remorquage.

4. Véhicule selon la revendication 3, caractérisé en ce que le moyen (19) permettant de soulever la flèche comprend un sac de suspension par air.

5. Véhicule selon la revendication 1, 2, 3 ou 4, caractérisé par un élément de levage accessoire (30) monté transversalement à la partie extérieure pouvant être allongée de la flèche afin de permettre la fixation de chaînes de levage pour faciliter le remorquage du véhicule à remorquer.

6. Véhicule selon l'une quelconque des revendications précédentes, caractérisé par un moyen de verrouillage (21) permettant de maintenir fixes le premier élément (22) et l'élément extérieur (24) de la flèche en chacune des positions de retrait et d'allongement.

7. Véhicule selon la revendication 5, caractérisé par un élément de raccordement du type articulation universelle (31) qui relie ledit élément de levage accessoire (30) à l'élément extérieur (24) de la flèche (16) afin de permettre que l'élément de levage accessoire (30) pivote sur au moins deux axes différents.

*Fig-1*

*Fig-2*

*Fig-3*

*Fig-4*

*Fig-5*

0 026 760

Fig-6

Fig-7

Fig-8

Fig-9

2